# EUROPÄISCHE PATENTSCHRIFT

(11) **EP 3 205 203 B1**
(45) Veröffentlichungstag und Bekanntmachung des Hinweises auf die Patenterteilung: **10.04.2019**
(21) Anmeldenummer: 17151571.1
(22) Anmeldetag: 16.01.2017
(51) Int. Cl.: A01F 15/04, A01F 15/08

(54) **VERFAHREN ZUR VERARBEITUNG LANDWIRTSCHAFTLICHER PRODUKTE, INSBESONDERE VON FUTTERMAIS**
METHOD FOR THE PROCESSING OF AGRICULTURAL PRODUCTS, IN PARTICULAR FEED MAIZE
PROCÉDÉ POUR LE TRAITEMENT DES PRODUITS AGRICOLES, EN PARTICULIER POUR MAÏS DE FOURRAGE

(30) Priorität: 12.02.2016 CH 1842016
(43) Veröffentlichungstag der Anmeldung: 16.08.2017
(73) Patentinhaber: Lisibach, Urs, 6020 Emmenbrücke (CH)
(72) Erfinder: Lisibach, Urs, 6020 Emmenbrücke (CH)
(74) Vertreter: Herrmann, Johanna

(56) Entgegenhaltungen:
- EP-A1- 0 459 828
- EP-A1- 2 666 351
- WO-A1-01/52629
- WO-A1-2013/017229
- FR-A- 1 340 694
- US-A- 132 566
- US-A- 5 531 061

## Beschreibung

Die vorliegende Erfindung bezieht sich auf ein Verfahren zum Verarbeiten, insbesondere zum Pressen und Verdichten landwirtschaftlicher Produkte, bei dem das landwirtschaftliche Produkt in eine Pressform eingefüllt wird, deren Seitenwände einen Trog bilden, und jeweils durch zumindest eine Pressvorrichtung gegen die jeweils zu dieser korrespondierende Seitenwand der Pressform gedrückt und dadurch bis zu einem vorherbestimmten Endmaß eines fertigen Ballens aus dem landwirtschaftlichen Produkt als Ballenmaß verdichtet wird, wobei der Trog bei dem Pressen seitlich auf der einen Seite durch eine Ausstoßvorrichtung und auf der anderen Seite durch eine Begrenzungstür geschlossen und diese nach dem Pressen auf das genannte Ballenmaß geöffnet und der Ballen mittels der Ausstoßvorrichtung aus der Pressform in Richtung auf eine Verpackungseinheit zum Versehen des Pressgutes mit einer allseitigen Umhüllung ausgestossen wird. Die Erfindung bezieht sich ebenso auf die Verwendung dieses Verfahrens.

Insbesondere versteht sich die vorliegende Erfindung als Fortbildung einer Vorrichtung zum Verarbeiten landwirtschaftlicher Produkte, insbesondere von Futtermais, wie sie durch die EP 1 248 513 B1 bereits bekanntgeworden ist.

Mais ist heutzutage als Getreidepflanze weit verbreitet und liefert als sogenannter Futtermais einen wichtigen Grundstoff für die Tiermast. Unter anderem werden vollständige Maispflanzen im unreifen Zustand als Grünfutter verwendet. Maissilage dagegen wird aus ganzen Maispflanzen in der Milchreife gewonnen und ist weltweit das beherrschende Grundfutter für die Rindermast. Zudem wird die Maiskolbenschrotsilage als Basis für die Schweinemast eingesetzt. Da der Anbau des Futtermaises häufig durch spezialisierte landwirtschaftliche Betriebe erfolgt, sind die Produktion und die Weiterverwendung durch Betriebe zur Tiermast nicht selten räumlich getrennt, sodass der Futtermais transportiert und gelagert werden muss. Bereits die EP 1 248 513 B1 erläutert zwei bekannte Techniken, die zur Konservierung des Futtermaises eingesetzt werden.

Bei der Lagerung des Futtermaises in Hochsilos wird der gehäckselte und zerkleinerte Mais unter Beigabe von Zusatzstoffen in Türme gefüllt, kompaktiert und bis auf eine schmale Schicht an der Oberfläche von der Umgebung abgeschlossen, wodurch eine Gärung verhindert wird. Problematisch bei dieser Methode ist die Menge, die von den verarbeitenden Betrieben abgenommen werden kann. Um eine Gärung noch vor der Benutzung im Betrieb zu vermeiden, werden dem Futtersilo nur Ein- oder Zweitagesrationen entnommen, da ein hermetischer Abschluss von der Umgebung nicht mehr gewährleistet werden kann.

Die zweite verwendete Methode ist die Kompaktierung des gehäckselten Futtermaises in Sackpressen durch das Niederdrücken des Futtermaises mit Hilfe einer Pressplatte innerhalb eines nach oben offenen Sackes, welcher zur Stabilisierung in einem Korb hängt. Nachteilig an dieser Methode ist, dass sich der Futtermais erneut teilweise ausdehnen kann, wenn die Pressplatte nach der Verdichtung wieder aus dem Sack herausbewegt wird. Zudem ist der mögliche Verdichtungsgrad gering, da der Futtermais nur von einer Seite zusammengedrückt wird. Als weiterer Nachteil ist zu nennen, dass die Form des kompaktierten Futtermaises auf Grund der Geometrie des verwendeten Sackmaterials nicht optimal ist, so dass die Säcke nicht platzsparend gelagert werden können.

Aus der DE 38 00 479 A1 sowie der DE 38 18 578 A1 ist jeweils eine Vorrichtung zum Ernten von Feldfutter bekannt, bei welcher das Erntegut vom Boden aufgenommen und in einem Presskanal schichtweise verdichtet wird. Nach erfolgter Bindung wird der Ballen zur offenen Seite eines Stapelkanals geschoben und im weiteren Verlauf auf den Boden abgeworfen.

Demgegenüber offenbart die DE 34 07 353 A1 ein Fahrzeug zur Futterbergung mit Wechseleinrichtungen. Dieses Fahrzeug hat eine Aufnahme-, Förder-, Schneid- und Pressvorrichtung sowie die dazugehörige Wechseleinrichtung. Während des Pressens wird der Futterblock mit einer Netz- oder Folienbahn umreift.

Aus der EP 0 543 792 B1 ist wiederum eine Verpackungsmaschine zum Verpacken von Strohballen bekannt, bei der ein quaderförmiger Ballen mittels zwei Rolleneinheiten über 360° um die im Wesentlichen horizontale Achse drehbar ist, um Kunststofffolien in Schichten oder überlappend um den Strohfutterballen zu legen.

Und schließlich offenbart die DE 36 33 219 A1 eine Vorrichtung, bei welcher das landwirtschaftliche Produkt nach dem Pressen allseitig mit einer geschlossenen Umhüllung versehen wird. Für die Umhüllung wird ein Kunststofffolienmaterial in Form eines Schrumpffolienmaterials verwendet. Mittels eines sogenannten Haubenüberziehers wird der Pressblock in einer Richtung mit einer ersten Schrumpffolienhaube überzogen. Nach dem Anschrumpfen dieser Haube wird das Pressgut mittels einer Wendevorrichtung um 180° gewendet und eine zweite Schrumpffolienhaube über das freie, nunmehr oben liegende, andere Ende des Gutes gezogen und anschliessend mit Wärme derart beaufschlagt, dass die zweite Schrumpffolienhaube eng an das Pressgut anschrumpft und durch Verschweissen des Überlappungsabschnittes der beiden Schrumpffolienhauben eine insgesamt völlig dichte Umhüllung des Pressgutes entsteht.

Demgegenüber besteht die Weiterbildung des bekannten Standes der Technik, wie er durch die EP 0 543 792 B1 vorgeschlagen worden ist, darin, dass die entsprechende Vorrichtung zum Verarbeiten landwirtschaftlicher Produkte eine Pressform zum Verdichten bzw. Kompaktieren des Produktes zu einem Pressgut aufweist, wobei diese Pressform vorzugsweise mit zwei, einen Trog bildenden Seitenwänden und mehreren, senkrecht aufeinander stehenden und gegen die Seitenwände der Pressform drückbaren Presszylindern ausgestattet ist, und der Trog auf der einen Seite durch einen Ausstoßzylinder und auf der anderen Seite durch eine nach außen zu öffnende.

Begrenzungstür abschließbar ist, die mehrere ineinander verschachtelte Seitenwände aufweist, welche in geöffnetem Zustand die Form des Pressgutes bei dessen Transport mittels des Ausstoßzylinders zu der Verpackungseinheit so weit wie möglich stabilisieren sollen.

Bei der Anwendung dieser Vorrichtung hat sich als in gewissem Maße nachteilig gezeigt, dass das ballenförmige Pressgut bei dem Ausstoßen zu einer Vibration neigt, Material abbröckeln kann oder dass der Ballen im Extremfall auseinanderfällt.

Aus der US 5531061 A1 ist bekannt, einen Heuballen vor dem Verpacken in einer Presskammer vorzuverdichten. Die Höhe und Breite des Heuballens bleiben beim Pressvorgang unverändert, nur die Länge des Heuballens wird durch den Pressvorgang verringert.

Davon ausgehend liegt der vorliegenden Erfindung die Aufgabe zugrunde, den genannten Nachteil zu beseitigen oder zumindest zu verringern und gleichzeitig zu erreichen, dass die Presskraft von der nachträglich umwickelten Folie besser aufgenommen werden kann.

Gelöst wird die Aufgabe durch ein Verfahren zum Verarbeiten, insbesondere zum Pressen und Verdichten landwirtschaftlicher Produkte, bei dem das landwirtschaftliche Produkt in eine Pressform eingefüllt wird, deren Seitenwände einen Trog bilden, und jeweils durch zumindest eine Pressvorrichtung gegen die jeweils zu dieser korrespondierende Seitenwand der Pressform gedrückt und dadurch bis zu einem vorherbestimmten Endmaß eines fertigen Ballens aus dem landwirtschaftlichen Produkt als Ballenmaß verdichtet wird, wobei der Trog bei dem Pressen seitlich auf der einen Seite durch eine Ausstoßvorrichtung und auf der anderen Seite durch eine Begrenzungstür geschlossen und diese nach dem Pressen auf das genannte Ballenmaß geöffnet und der Ballen mittels der Ausstoßvorrichtung aus der Pressform in Richtung auf eine Verpackungseinheit zum Versehen des Pressgutes mit einer allseitigen Umhüllung ausgestoßen wird. Insofern diese Verfahrensschritte angesprochen sind, machen sie noch Gebrauch von der grundsätzlichen Offenbarung, wie sie bereits in der EP 0 543 792 B1 vorgeschlagen worden ist.

Erfindungsgemäß besteht die Weiterbildung aus der Bereitstellung der folgenden Schritte, bei denen es wesentlich darum geht, das landwirtschaftliche Produkt nicht nur auf das vorherbestimmte Ballenmaß zu pressen und zu verdichten, sondern darüber hinaus ein Überpressen zu bewirken.

Dazu wird zunächst ein Überpressweg definiert, d.h. vorherbestimmt und somit festgelegt. Das landwirtschaftliche Produkt wird dann durch zumindest eine der Pressvorrichtungen gegen die jeweilige, korrespondierende Seitenwand der Pressform, über das Ballenmaß hinaus, bis zu dem Ende des festgelegten Überpressweges gedrückt und damit überpresst. Sodann wird die Überpressung bei dem Erreichen des festgelegten Überpressweges gestoppt und die jeweilige Pressvorrichtung auf das Ballenmaß zurückgefahren. Durch die Überpressung wird das landwirtschaftliche Produkt somit in seiner Breite und Höhe verringert, während gemäss US 5531061 A1 die Länge der Heuballen verringert wird.

Durch diese erfindungsgemäße Weiterbildung der bisher bekannten Vorrichtung wird erreicht, dass der Ballen nach dem Zurückfahren auf das Ballenmaß weniger hart eingeklemmt ist, da das landwirtschaftliche Produkt zwar zurückfedert, aber nicht mehr gleich stark eingespannt ist. Die Kraft, welche den Ballen in dieser Form hält, ist daher deutlich kleiner als bei der bisher bekannten Vorrichtung. Dadurch kann der gepresste Ballen einfacher aus der Vorrichtung ausgeschoben werden, da die Reibung an den entsprechenden Seitenflächen der Vorrichtung geringer ist. Die verringerte Reibung bewirkt noch den zusätzlichen Effekt, dass der Ballen bei dem Ausstoßen weniger stark vibriert und in Folge davon weniger Material des gepressten landwirtschaftlichen Produkts abbröckelt. Im Extremfall wird dadurch das Auseinanderfallen des jeweiligen Ballens verhindert. Die erfindungsgemäß überpressten Ballen werden formstabiler, da durch das Überpressen und das nachträgliche Entspannen der Druck in dem jeweiligen Ballen abnimmt.

Durch das erfindungsgemäß vorgesehene Überpressen, wodurch der fertige Ballen also fester gepresst ist, als bisher im Stand der Technik bekannt, enthält der fertige Ballen im Vergleich zu dem auf das Ballenmaß gepressten Ballen weniger Luft. Bei dem Pressen kann mehr Luft und diese dazu auch leichter entweichen.

Besonders überraschend war die folgende Beobachtung: Durch das Überpressen mit dem nachfolgenden Entspannen, d.h. dem Zurückfahren der jeweiligen Pressvorrichtung auf das Ballenmaß, wodurch ein geringfügiges Vakuum entstehen kann, wird im Zusammenspiel mit dem verringerten Sauerstoffgehalt in dem Ballen die Silagequalität verbessert.

Des Weiteren hat sich als vorteilhaft gezeigt, dass die Presskraft in der Verpackungseinheit, welche für das Versehen des Pressgutes mit einer allseitigen Umhüllung dient, von der z.B. als Umhüllung dienenden Folie besser aufgenommen werden kann. Dies u.a. deshalb, weil sich die erfindungsgemäß überpressten Ballen nach dem Umwickeln mit der Folie weniger ausdehnen, da die Rückfederungskraft des Ballens kleiner ist. Die Folie, bzw. die Umhüllung, kann somit die verbleibende Rückfederungskraft des Ballens besser aufnehmen.

Das Festlegen des Überpressweges kann als Strecke erfolgen, welche von dem oder den Presszylindern über das Ballenmaß hinaus zurückgelegt wird. Vorzugsweise wird diese Strecke über ein Wegmess-System gemessen.

Grundsätzlich gilt dabei, dass der Überpressweg in der Weise vordefiniert bzw. vorherbestimmt ist, dass er kleiner bis gleich zu dem konstruktiv bei der Vorrichtung möglichen maximalen Verfahrweg ist. Je nach dem, was zuerst eintritt, wird das Überpressen beendet und der Presskolben fährt zurück.

Die jeweilige Pressvorrichtung kann als ein Presszylinder ausgebildet sein, so dass das Pressen dann durch die jeweiligen Kolben der Zylinder bewirkt wird. Bevorzugt wird der maximaler Überpressweg für das Überpressen dabei kleiner als der mechanisch vom Zylinder vorgegebene Weg festgelegt.

Außerdem kann vorgesehen sein, dass mehr als eine der Pressvorrichtungen nacheinander gegen die jeweilige Seitenwand der Pressform, über das Ballenmaß hinaus, bis zu dem Ende des festgelegten Überpressweges gedrückt und damit das landwirtschaftliche Produkt überpresst wird.

Gemäß einer Variante des erfindungsgemäßen Verfahrens kann das Vorherbestimmen und Festlegen des Überpressweges über den Anpressdruck erfolgen, der beispielsweise über Sensoren gemessen wird. Ist der vorherbestimmte maximale Anpressdruck erreicht, entspricht dies dem gewünschten, festgelegten Überpressweg. Dieser muss nicht gleich dem Systemdruck der Hydraulik sein, über welche die Kolben der Zylinder betrieben werden. Vorzugsweise wird der maximale Anpressdruck so festgelegt, dass er geringer ausgewählt wird als der Systemdruck der Hydraulik.

Auch hier gilt grundsätzlich, dass der Pressdruck kleiner bis gleich zu dem maximalen Systemdruck ist. Je nach dem was zuerst eintritt, wird das Überpressen beendet und der Presskolben fährt zurück.

Gemäß einer weiteren Variante des erfindungsgemäßen Verfahrens kann das Vorherbestimmen und Festlegen des Überpressweges auch über eine mechanische Verriegelung erfolgen. Zusätzlich oder alternativ kann ausserdem vorgesehen sein, dass das Zurückfahren der jeweiligen Pressvorrichtung auf das Ballenmaß über eine mechanische Verriegelung bestimmt wird.

Wenn das Zurückfahren der jeweiligen Pressvorrichtung auf das Ballenmaß über eine mechanische Verriegelung bestimmt wird, bedeutet dies praktisch, dass damit die Ausstoßposition über einen bzw. mit einem mechanischen Anschlag definiert wird. Diese Ausführung erhält insbesondere dadurch Bedeutung, dass sie ein konstruktiv aufwendigeres Wegmess-System des Presszylinders überflüssig machen kann. Es ist ebenso eine Variante möglich, bei welcher nur das Zurückfahren der jeweiligen Pressvorrichtung auf das Ballenmaß über eine mechanische Verriegelung bestimmt wird.

Und gemäß noch einer Variante des erfindungsgemäßen Verfahrens kann das Vorherbestimmen und Festlegen des Überpressweges durch folgende Schritte erfolgen:
- Erfassen der Position von zumindest einer der Pressvorrichtungen über den von ihr zurückgelegten Weg,
- Steuern des von der zumindest einen Pressvorrichtung zurückgelegten Wegs und Stoppen der Pressvorrichtung und damit der Überpressung sowie Zurückfahren der jeweiligen Pressvorrichtung bei dem Erreichen des festgelegten Überpressweges.

Gemäß noch einer Weiterbildung des erfindungsgemäßen Verfahren kann vorgesehen sein, dass zumindest eine der Pressvorrichtungen ausgewählt und in Richtung auf das zu verdichtende landwirtschaftliche Produkt mit einem zusätzlichen Aufbau versehen wird, dessen Ausdehnung in Richtung auf das zu verdichtende landwirtschaftliche Produkt dem vorherbestimmten und festgelegten Überpressweg in etwa entspricht, so dass durch das Drücken des landwirtschaftlichen Produkts durch diese eine modifizierte Pressvorrichtung gegen die jeweilige korrespondierende Seitenwand der Pressform ein Überpressen des landwirtschaftlichen Produkts über das Ballenmaß hinaus bis zu dem Ende des festgelegten Überpressweges erfolgt, die Überpressung bei dem Erreichen des festgelegten Überpressweges gestoppt und die ausgewählte Pressvorrichtung auf das Ballenmaß zurückgefahren wird.

Es kann darüber hinaus auch noch vorgesehen sein, dass mehr als eine der Pressvorrichtungen in Richtung auf das zu verdichtende landwirtschaftliche Produkt mit einem zusätzlichen Aufbau versehen wird und diese nacheinander gegen die jeweils korrespondierende Seitenwand der Pressform, über das Ballenmaß hinaus, bis zu dem Ende des festgelegten Überpressweges gedrückt und damit das landwirtschaftliche Produkt überpresst wird.

Dabei kann der zusätzliche Aufbau, mit dem zumindest eine der Pressvorrichtungen versehen wird, die Form einer Platte aufweisen.

Die Erfindung bezieht sich auch auf die Verwendung des zuvor in verschiedenen Ausführungsvarianten erläuterten Verfahrens zum Pressen und Verdichten eines landwirtschaftlichen Produkts in Form von Futtermais.

Im folgenden soll das erfindungsgemässe Verfahren unter Bezugnahme auf die beigefügten Fig. der Zeichnung und insbesondere unter Bezugnahme auf die für die Durchführung des Verfahrens erforderliche Vorrichtung näher erläutert werden.

Es zeigen:
- Fig. 1a:: einen Querschnitt durch eine zur Ausführung des Verfahrens verwendete Pressform in Vorderansicht mit einer auf einem der Presskolben angebrachten Platte,
- Fig. 1b:: einen Querschnitt durch die Pressform in Vorderansicht ohne eine zusätzlich auf einem der Presskolben angebrachte Platte,
- Fig. 1c:: einen senkrecht zu der Abbildung gemäß Fig. 1b stehenden, teilweisen Vertikalschnitt des Transportweges in Seitenansicht,
- Fig. 2a:: eine teilweise geschnittene Vorderansicht der Folienrolle mit einer schematischen Darstellung des Abrollens der Kunststoffhülle in einer ersten Wickelrichtung
- Fig. 2b:: eine schematische, teilweise geschnittene Seitenansicht der entsprechenden mechanischen Elemente nach Fig. 2a,
- Fig. 3a:: eine teilweise geschnittene Seitenansicht des Abrollens der Kunststoffhülle in einer zweiten Wickelrichtung,
- Fig. 3b:: eine teilweise geschnittene Aufsicht des Abrollens der Kunststoffhülle in der zweiten Wickelrichtung,
- Fig. 4a:: eine schematische Darstellung der Orientierung der Kunststoffhülle nach der ersten Wicklung, und
- Fig. 4b:: eine schematische Darstellung der Orientierung der Kunststoffhülle nach der zweiten Wicklung.

Das erfindungsgemäß vorgeschlagene Verfahren, das sich insbesondere, aber nicht ausschließlich zum Verarbeiten von Futtermais eignet, wird unter Bezugnahme auf eine Vorrichtung durchgeführt, wie sie bereits aus der EP 0 543 792 B1 bekannt und dort näher beschrieben worden ist. Da das hier erläuterte Verfahren in seinen möglichen Varianten als Weiterführung darauf basiert, muss somit auch diese Vorrichtung im Rahmen der Beschreibung von Ausführungsbeispielen beschrieben werden.

Ganz grundsätzlich besteht die genannte Vorrichtung aus zwei Einheiten. In einer Kompaktiereinheit, welche im folgenden als Pressform bezeichnet ist, wird Futtermais in gehäckselter Form von oben her in eine nach unten zulaufende Form, die einen Trog bildet, eingeführt, anschließend von zwei senkrecht gegeneinander beweglichen Presszylindern gegen die Wände der Form gedrückt und dabei verdichtet. Im Anschluss an die Verdichtung wird das Pressgut durch einen dritten Zylinder aus der Form geschoben und in der Verpackungseinheit von einer Folienrolle in zwei Richtungen mit einem strapazierfähigen Kunststoffmantel umhüllt.

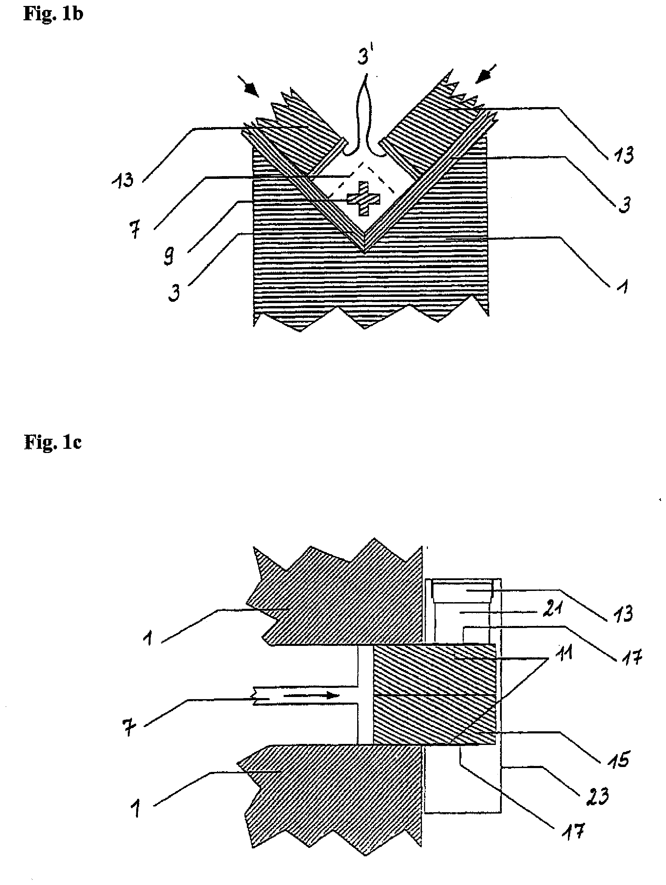

In Fig. 1b ist zunächst eine Pressform im Querschnitt wiedergegeben, die insgesamt mit der Bezugsziffer 1 versehen ist. Im gezeigten Ausführungsbeispiel weist diese Pressform 1 zwei Seitenwände 3 auf, welche einen Trog 5 bilden, der seitlich durch einen Ausstoßzylinder 7 mit einem aufgesetzten Kreuzelement 9 und auf der anderen Seite durch eine Begrenzungstür 11 abgeschlossen wird, welche aus Fig. 1c ersichtlich ist.

In den Trog 5 wird das landwirtschaftliche Produkt, hier der Futtermais, eingefüllt und anschließend durch zumindest zwei, senkrecht aufeinander stehende Presszylinder 13 gegen die zu dem jeweiligen Presszylinder korrespondierende Seitenwand 3 der Pressform gedrückt und auf diese Weise von mehreren Seiten, in diesem Ausführungsbeispiel von zwei Seiten, verdichtet.

Diese Verdichtung wird gesteuert und erfolgt in dem Stand der Technik bis zu einem vorherbestimmten Endmaß eines fertigen Ballens aus dem landwirtschaftlichen Produkt, hier dem Futtermais, das als Ballenmaß bezeichnet wird. Für die Zwecke einer besseren Erläuterung der Unterschiede der vorliegenden Erfindung zu dem Stand der Technik wird diese Begrifflichkeit hier beibehalten. Der fertige Ballen gemäß dem Verfahren, wie es der vorliegenden Erfindung zugrundeliegt, wird grundsätzlich zunächst kleiner gedrückt als dieses Ballenmaß und dehnt sich anschließend in der Regel wieder bis zu dem Ballenmaß aus, hat dann aber eine geringere Rückfederungskraft. Ist gemäß dem Stand der Technik die gewünschte Verdichtung auf das Ballenmaß erreicht, verharren die Presszylinder 13 in dieser Position, die gleichzeitig ihre Endposition darstellt und bilden damit zwei zusätzliche Seitenwände 3' der Pressform 1.

Das in der gewünschten Verdichtung vorliegende landwirtschaftliche Produkt, der Futtermais, wird nachfolgend als Pressgut bezeichnet und mit der Bezugsziffer 15 versehen. Um dieses Pressgut 15 aus der Pressform 1 herauszubewegen, wird die Begrenzungstür 11 nach außen geöffnet. Dabei besteht die Begrenzungstür 11 aus vier ineinander verschachtelten Seitenelementen 17, denen im geöffneten Zustand die Aufgabe zukommt, die Form des Pressgutes 15 beim Transport so weit wie möglich zu erhalten und dadurch ein Zerfallen zu verhindern, wie Fig. 1c dies veranschaulicht.

Der Ausstoßzylinder 7 schiebt das Pressgut 15 seitlich aus der Pressform 1, wobei das Pressgut 15 durch die Seitenelemente 17 stabilisiert und gleichzeitig durch eine erste Folienrolle 19 mit einer Umhüllung, im Ausführungsbeispiel mit einer Kunststoffhülle 21, ummantelt wird.

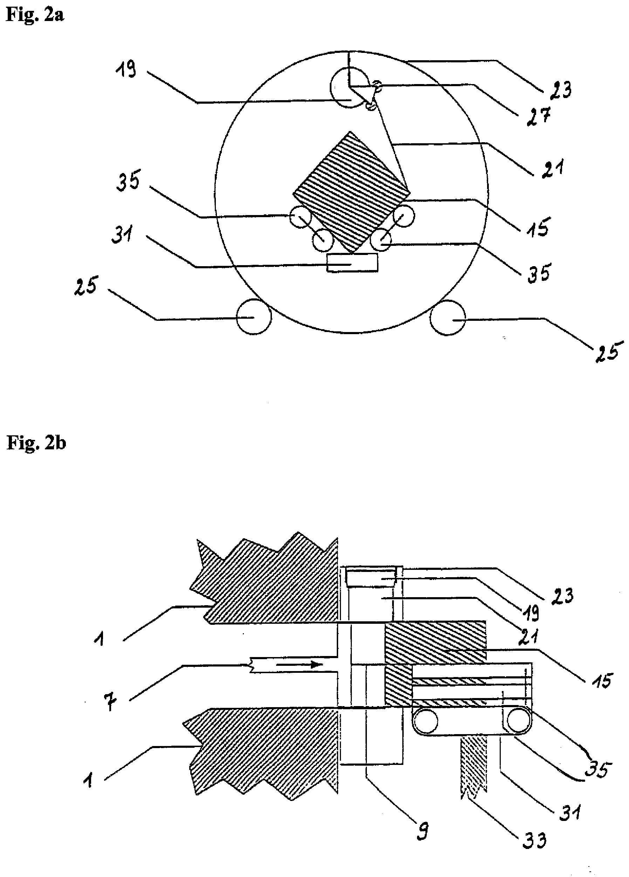

In Fig. 2a ist eine Vorderansicht der ersten Folienrolle 19 zusammen mit einer schematischen Darstellung des Abrollens der Kunststoffhülle 21 in der ersten Richtung dargestellt. Die Folienrolle 19 ist stationär an einem Ringelement 23 befestigt, welches über zwei Rollelemente 25 in eine Rotationsbewegung um das Pressgut 15 versetzt wird und die Folienrolle 19 um das Pressgut 15 herum führt. Dabei wird die Kunststoffhülle 21 von der Folienrolle 19 abgerollt und auf das Pressgut 15 aufgezogen, wobei durch die Bremsvorrichtungen 27 für eine stete Zugspannung und ein optimales Auflegen der Kunststoffhülle 21 auf das Pressgut 15 gesorgt wird, ohne dass sich das Pressgut 15 währenddessen wieder ausdehnt oder zerfällt. Das Pressgut 15 wird durch den Ausstoßzylinder 7 langsam aus der Pressform 1 geschoben und umfangsseitig vollständig mit der Kunststoffhülle 21 eingepackt. Erreicht das Pressgut 15 einen bestimmten Abstand von der Pressform 1, wird es an der unteren Seite von einem drehbar gelagerten Wickeltisch 29 mit beweglichem Gummiband 31 abgestützt und mitgeführt, wie dies aus Fig. 2b ersichtlich ist. Nachdem das Pressgut 15 eingehüllt worden ist, wird es durch das Kreuzelement 9 vom Ausstoßzylinder 7 abgetrennt.

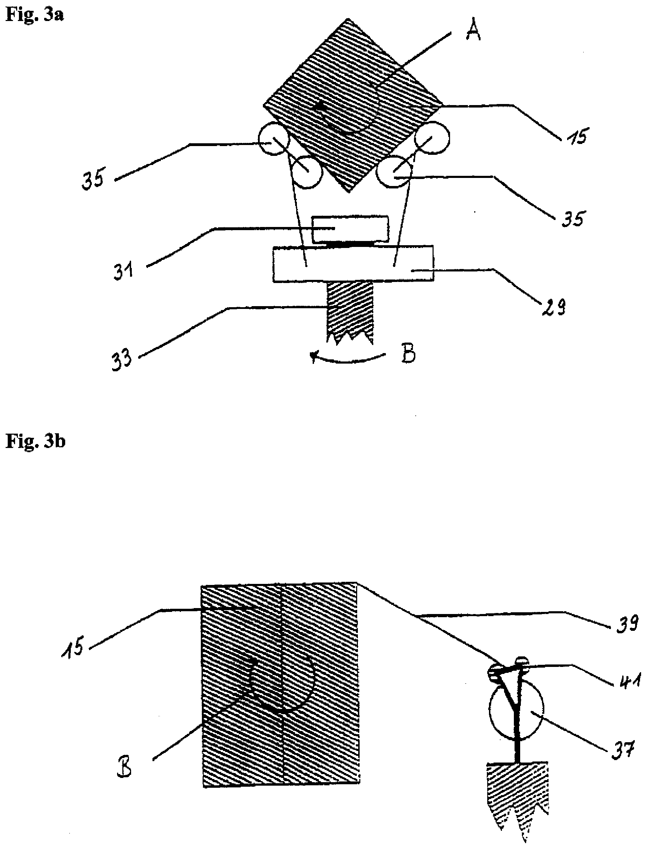

In den Fig. 3a und 3b wird das Abrollen der Kunststoffhülle 21 in der zweiten Richtung dargestellt. Wie aus Fig. 3a ersichtlich, sind an den Wickeltisch 29 eine Drehstange 33 sowie zwei Seitenarme mit Rollelementen 35 angesetzt. Im Anschluss an die Abtrennung des Pressgutes 15 vom Ausstoßzylinder 7 wird dieses mit Hilfe der Rollelemente 35 so angehoben, dass kein Kontakt mehr mit dem Gummiband 31 besteht. Der Wickeltisch 29 rotiert horizontal um die Drehstange 33, während von einer zweiten Folienrolle 37 eine Umhüllung, insbesondere eine Kunststoffhülle 39, abgerollt und mit Hilfe zusätzlicher Bremsvorrichtungen 41 fest auf das Pressgut 15 aufgezogen wird. Zusätzlich zur Rotation um die vertikale Drehstange 33 wird entlang dem Pfeil A in Fig. 3a eine Drehbewegung um eine horizontale Drehachse durch die zumindest teilweise angetriebenen Rollelemente 35 ausgeübt, so dass die Wicklung der zweiten Kunststoffhülle 39 als eine Überlagerung der Rotation (siehe Pfeil B in Fig. 3b) um die vertikale Achse 33 und der Drehung (siehe Pfeil A in Fig. 3a) um eine horizontale Achse angesehen werden kann.

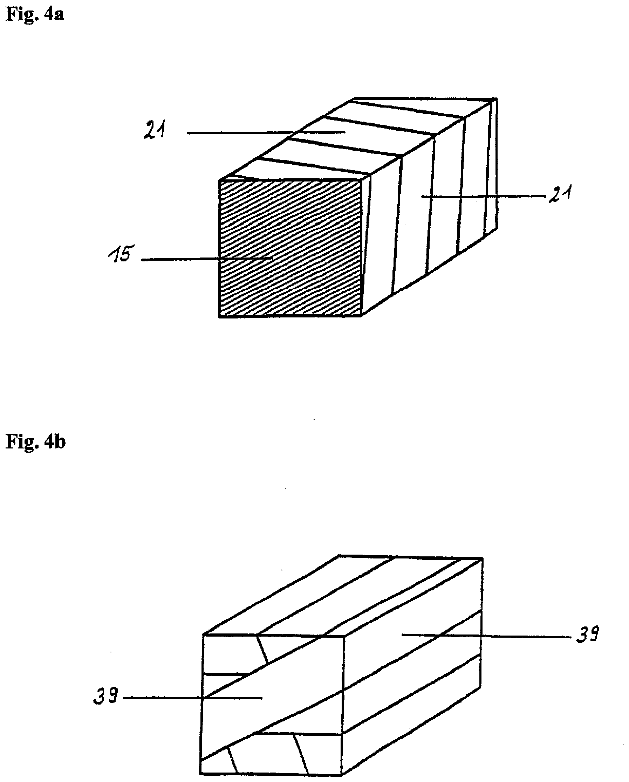

In den Fig. 4a und 4b ist schematisch die Wicklung des Pressgutes 15 dargestellt, wie sie sich auch gemäß dem Verfahren der vorliegenden Erfindung ergibt.

Durch das gleichzeitige Herausbewegen des Pressgutes 15 aus der Pressform 1 und das Abrollen der Kunststoffhülle 21 von der Folienrolle 19 ergibt sich bei der ersten Wicklung eine spiralartige Querwicklung, die aus Fig. 4a ersichtlich ist. Bei der zweiten, senkrecht auf der Querwicklung liegenden Wicklung handelt es sich um eine Längswicklung, wie Fig. 4b zeigt. Zusammenfassend lässt sich die Hülle als eine Kreuzwicklung bezeichnen, die auf der äusseren Mantelfläche in zwei Schritten in zwei verschiedenen Richtungen durchgeführt wird. Das Ergebnis ist eine sehr stabile Ummantelung. Wenn nun das Pressgut portionsweise in Scheibenform quer zu den äußeren Wickelungen abgeschnitten wird, zerfällt das übrige Pressgut nicht, weil durch das Aufschneiden quer zu den äußeren Wicklungen auch nur diese äußeren Wicklungen sich lösen können, während die restlichen inneren Wickelungen, welche beinahe parallel zur Schneiderichtung verlaufen und leicht aufeinander kleben, intakt bleiben.

Ziel der vorliegenden Erfindung ist es, das zuvor grundsätzlich erläuterte Verarbeiten, d.h. insbesondere das Pressen und Verdichten landwirtschaftlicher Produkte und das Bereitstellen derselben in Ballenform, zu verbessern. Dies soll nun im folgenden in verschiedenen Varianten erläutert werden.

### I.1. Verfahren zum Verarbeiten, insbesondere zum Pressen und Verdichten landwirtschaftlicher Produkte gemäß einer ersten Variante

Wie weiter oben erläutert, wird das landwirtschaftliche Produkt, im Ausführungsbeispiel der Futtermais, in eine Pressform 1 eingefüllt, deren Seitenwände 3 einen Trog 5 bilden. Der Futtermais wird dann durch zwei, senkrecht aufeinander stehende Presszylinder 13 gegen die jeweils zu diesen korrespondierende Seitenwand 3 der Pressform 1 gedrückt. Auf diese Weise erfolgt zunächst die Verdichtung bis zu dem weiter oben genannten Ballenmaß. Bei dem Erreichen dieses Ballenmaßes bilden die beiden, senkrecht aufeinander stehenden Presszylinder 13 die beiden bereits genannten zusätzlichen Seitenwände 3', welche dann aneinanderstoßend angeordnet sind.

Als wesentlich für das vorliegend beanspruchte erfindungsgemäße Verfahren stellt sich ein sogenanntes Überpressen dar. Dazu wird ein Überpressweg vorherbestimmt und zumindest bei einem der Presszylinder 13 presst der jeweilige Presskolben den Futtermais oder ein anderes landwirtschaftliches Produkt über das genannte Ballenmaß weiter, bis zu dem Erreichen des vorherbestimmten maximalen Überpressweges. Der maximale Überpressweg wird in diesem Ausführungsbeispiel über ein Wegmess-System ermittelt, welches die Position des Zylinders erfasst. Die dafür eingesetzte Steuerung erkennt somit jederzeit, wo der Presskolben des überpressenden Presszylinders 13 steht. Für diese Steuerung des Überpressweges stehen dem Fachmann geeignete Methoden zur Auswahl, so dass hierauf nicht näher eingegangen werden muss.

Ist der maximal gewünschte Überpressweg erreicht, wird das Überpressen gestoppt und der Presszylinder 13, bzw. der entsprechende Presskolben fährt wieder auf das Ballenmaß zurück.

In dem Ausführungsbeispiel wird der gewünschte maximale Überpressweg kleiner festgelegt als der mechanisch von dem Zylinder vorgegebene Weg, was mittels des genannten Wegmess-Systems gemessen wird. D.h. der vorherbestimmte maximale Überpressweg wird etwas unterhalb des mechanisch maximal möglichen Überpressweges eingestellt.

Auf diese Weise wird der Futtermais oder ein anderes landwirtschaftliches Produkt zusätzlich und damit über das Ballenmaß hinaus, verdichtet und durch das anschließende Zurückfahren des jeweiligen Presskolbens auf das Ballenmaß wieder entspannt.

In einer Ausführung der Pressvorrichtung wurde das Überpressen und nachfolgende Entspannen nur mit einem der Presszylinder 13 durchgeführt. Dafür wies der für das Überpressen ausgewählte Presskolben 13 längere Zylinder in der Weise auf, dass je nach der Maschinengröße der Vorrichtung ein Überpressen von 50 - 80mm erreicht wurde. Dem Fachmann erschliesst sich dabei ohne weiteres, dass diese genannten Werte für den erreichbaren Überpressweg exemplarischer Natur sind und dem Veranschaulichen der Erfindung dienen. Bedingt durch eine andere Länge des Presskolbens des Presszylinders 13 sind genauso andere Längen für den Überpressweg und damit für das Überpressen realisierbar.

Dem Fachmann erschließt sich ebenso ohne weiteres, dass das hier durch die Länge des jeweiligen Zylinders erreichte Einstellen eines Überpressweges auch durch das Montieren von zumindest einem weiteren Zylinder erreicht werden kann, um den Hub des entsprechenden Zylinders zu vergrößern. Dies bedeutet praktisch, dass der weitere Zylinder entsprechend des gewünschten Hubs für das Überpressen angefertigt und eingesetzt wird.

### I.2. Verfahren zum Verarbeiten, insbesondere zum Pressen und Verdichten landwirtschaftlicher Produkte gemäß einer zweiten Variante

Insoweit sich diese zweite Variante zum Pressen und Verdichten landwirtschaftlicher Produkte nicht von der zuvor erläuterten Variante **I.1.** unterscheidet, wird auf die bisherigen Ausführungen Bezug genommen. Im Folgenden werden daher nur die Unterschiede zu der ersten Variante dargelegt.

Wesentlich für diese Variante des erfindungsgemäßen Verfahrens ist das Festlegen und Kontrollieren des Überpressweges über den Anpressdruck.

Der maximale Überpressweg wird daher in diesem Ausführungsbeispiel über den Druck geregelt, welcher sich bei dem Überpressen aufbaut. Der Hydraulikzylinder hat einen gewissen Überpressweg zu Verfügung, wie er vorherbestimmt ist. Ist der Pressdruck auf ein definiertes Maximum angestiegen, wird dadurch das Erreichen der gewünschten Überpressung angezeigt, das Überpressen gestoppt und der Presszylinder 13, bzw. der entsprechende Presskolben wieder auf das Ballenmaß zurückgefahren. Der maximale Druck wird dabei so festgelegt, dass er kleiner ist als der Systemdruck der Hydraulik, was im Ausführungsbeispiel mittels eines Öldrucksensors gemessen wird. D.h. der maximale Druck für die Überpressung wird gemäss diesem Ausführungsbeispiel etwas unterhalb des maximal möglichen Drucks eingestellt. Auch für die Steuerung des Überpressweges gemäß dieser Variante über den Druck ist die Verwendung des genannten Öldrucksensors eine Möglichkeit, welche für die Zwecke der Erläuterung hier angegeben ist. Es stehen dem Fachmann weitere geeignete Methoden zur Auswahl, auf die hier nicht näher eingegangen werden muss.

Der für das Überpressen ausgewählte Presskolben 13 kann wieder jeweils einen längeren Zylinder in der Weise aufweisen, dass je nach der Maschinengröße der Vorrichtung ein Überpressen von 50 - 80mm erreicht wird. Dieser Wertebereich ist auch hier exemplarisch zu verstehen.

Genauso kann hier die Länge des jeweiligen Zylinders für das Einstellen des Überpressweges durch das Montieren von zumindest einem weiteren Zylinder erreicht werden, um den Hub des enstprechenden Zylinders zu vergrößern. Der weitere Zylinder wird entsprechend des gewünschten Hubs für das Überpressen angefertigt und eingesetzt.

### I.3. Verfahren zum Verarbeiten, insbesondere zum Pressen und Verdichten landwirtschaftlicher Produkte gemäß einer dritten Variante

Es wird auf die bisherigen Ausführungen Bezug genommen, soweit sich diese Variante zum Pressen und Verdichten landwirtschaftlicher Produkte nicht von den zuvor erläuterten Varianten unterscheidet, und es werden nur die Unterschiede dazu erläutert.

Bei dieser Variante des erfindungsgemäßen Verfahrens das Festlegen und Kontrollieren des Überpressweges mittels mechanischer Massnahmen erreicht.

Unter dieser mechanischen Maßnahme ist in diesem Ausführungsbeispiel eine mechanische Verriegelung dahingehend zu verstehen, dass der Presszylinder 13, bzw. der entsprechende Presskolben bei dem Erreichen des definierten, maximalen Überpressweges über die mechanische Verriegelung gestoppt und wieder auf das Ballenmaß zurückgefahren wird. Die mechanische Verriegelung stellt für den Presskolben einen fixen Anschlag dar.

Auch hier wird für das Überpressen eine Wegstrecke von 50 - 80mm exemplarisch ausgewählt.

In einer Weiterbildung dieser Variante wurde nicht nur der Überpressweg mittels mechanischer Maßnahmen festgelegt, sondern es wurde auch für die bei dem Zurückfahren des jeweiligen Presskolbens nach dem Erreichen des festgelegten Überpressweges wieder zu erreichende Ausstoßposition des überpressten Ballens ein mechanischer Anschlag verwendet. Auf diese Weise entfällt ein erheblicher Anteil an Aufwand für das Steuern und Regeln des Verarbeitungsverfahrens für das Pressen und Verdichten des jeweiligen landwirtschaftlichen Produkts, d.h. es kann das Wegmess-System für den jeweiligen Zylinder oder das Messen des festgelegten maximalen Anpressdruck mittels des Öldrucksensors entfallen.

Dazu noch alternativ ist es auch durchführbar, nur für die bei dem Zurückfahren des jeweiligen Presskolbens nach dem Erreichen des festgelegten Überpressweges wieder zu erreichende Ausstoßposition des überpressten Ballens einen mechanischen Anschlag zu verwenden. Das Mess- und Regelsystem für die Kontrolle des Überpressweges als Strecke (über das Wegmess-System) oder über den Anspressdruck (z.B. über den Ölsensor) bleibt erhalten. Es zeigt sich, dass dadurch zumindest ein Teil des Aufwandes verringert werden kann, der für das Steuern und Regeln aufzuwenden ist.

Diese hier aufgezeigten Varianten haben ihre Bedeutung in der Vereinfachung des erfindungsgemäßen Überpressverfahren, was zu kostengünstigeren Ausführungsformen der Vorrichtungen, d.h. der landwirtschaftlichen Maschinen führt, wie sie für das Verarbeiten des jeweiligen landwirtschaftlichen Produkts zu der Ballenform unter Ausnützen des hier erläuterten Überpressens eingesetzt werden, die beachtlich sind.

### I.4. Verfahren zum Verarbeiten, insbesondere zum Pressen und Verdichten landwirtschaftlicher Produkte gemäß einer vierten Variante

Erneut wird auf die bisherigen Ausführungen Bezug genommen, soweit sich diese Variante zum Pressen und Verdichten landwirtschaftlicher Produkte nicht von den zuvor erläuterten Varianten unterscheidet, und es werden nur die Unterschiede dazu erläutert.

Bei dieser Variante des erfindungsgemäßen Verfahrens steht das nacheinanderfolgende Überpressen mit dem zweiten Presszylinder 13, bzw. dem jeweiligen Presskolben im Vordergrund.

D.h. praktisch, dass beide Presszylinder 13, wie sie Fig. 1b zeigt, nacheinander gegen die jeweilige Seitenwand 3 der Pressform und damit über das Ballenmaß hinaus, bis zu dem Ende des festgelegten Überpressweges gedrückt und damit das landwirtschaftliche Produkt von zwei Seiten überpresst wird.

Somit wird bei dieser Variante zunächst ein Überpressen mit einem der Presskolben durchgeführt, der Überpressweg dabei eingestellt, wie in den Varianten **I.1 - I.3** erläutert, und der Presskolben bei dem Erreichen des gewünschten Überpressweges wieder auf das Ballenmaß zurückgefahren. Erst dann wird mit dem zweiten, weiteren Presszylinder 13 genauso verfahren.

Auch wenn diese Variante etwas zeitintensiver ist als die bisher erläuterten Ausführungsformen, bei denen das Überpressen nur mit einem der Presszylinder 13 über die Presskolben erreicht wird, so wird doch ein nochmals intensiveres Pressen des jeweiligen Ballens erreicht und es hat sich gezeigt, dass die für das Überpressen in dieser Anmeldung dargelegten Vorteile nochmals stärker hervortreten.

### II. Verfahren zum Verarbeiten, insbesondere zum Pressen und Verdichten landwirtschaftlicher Produkte gemäß einer fünften Variante

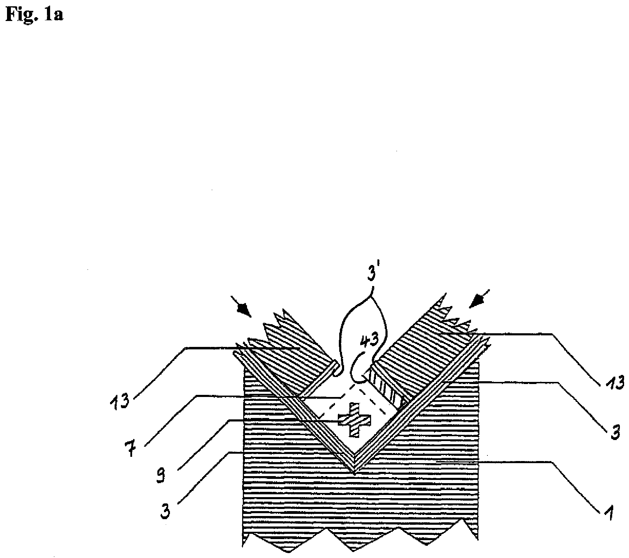

Für diese Variante des erfindungsgemässen Verfahrens war eine konstruktive Veränderung der Vorrichtung erforderlich, welche für das Verdichten des landwirtschaftlichen Produkts zum Einsatz kam, die nachfolgend unter Bezugnahme auf Fig. 1a erläutert werden soll.

Die in Fig. 1a im Querschnitt wiedergegebene Pressform 1 weist wieder zwei Seitenwände 3 auf, welche einen Trog 5 bilden, der seitlich durch einen Ausstoßzylinder 7 mit einem aufgesetzten Kreuzelement 9 und auf der anderen Seite durch eine Begrenzungstür 11 abgeschlossen wird.

Nachdem das landwirtschaftliche Produkt, hier der Futtermais, in den Trog 5 eingefüllt worden ist, dienen die beiden senkrecht aufeinander stehenden Presszylinder 13 zur Verdichtung des landwirtschaftlichen Produkts, indem die Presszylinder gegen die zu dem jeweiligen Presszylinder korrespondierende Seitenwand 3 der Pressform gedrückt werden.

Hierfür wird einer der Presszylinder 13 ausgewählt und in Richtung auf das zu verdichtende landwirtschaftliche Produkt mit einem zusätzlichen Aufbau in Form einer Platte 43 versehen, deren Ausdehnung in Richtung auf das zu verdichtende landwirtschaftliche Produkt gerade so gewählt ist, dass sie dem definierten, vorherbestimmten und auf diese Weise festgelegten Überpressweg in etwa entspricht. Nach dem Einfüllen des landwirtschaftlichen Produkts in den Trog 5 werden die Presszylinder 13, bzw. die Presskolben, in Richtung auf Pressgut, d.h. das landwirtschaftliche Produkt gefahren und die Presszylinder 13 somit gegen korrespondierende Seitenwand 3 der Pressform gedrückt. Dabei wird das Pressgut von dem die Platte 43 aufweisenden Presskolben automatisch stärker, nämlich über das Ballenmaß hinaus bis zu dem Ende des festgelegten Überpressweges gepresst. Anschließend wird der mit der Platte 43 versehene Presszylinder 13 um das Maß zurückgefahren, welches der Ausdehnung der Platte 43 in Richtung auf das Pressgut, und damit dem Überpressweg entspricht. D.h. die Überpressung wird bei dem Erreichen des festgelegten Überpressweges automatisch gestoppt und der ausgewählte, mit der Platte 43 versehene Presszylinder 13 muss nur noch auf das Ballenmaß zurückgefahren werden. Dann bilden der Presszylinder 13 ohne den Aufbau und der mit der Platte versehenen Presszylinder 13 die weiteren zwei Seitenwände 3' der Pressform 1.

Dieses Zurückfahren des mit der Platte versehenen Presszylinders 13 um die Länge des Überpressweges ist erforderlich, um dieses Pressgut 15 aus der Pressform 1 herausbewegen zu können, d.h. damit der Ausstoßzylinder 13 das Pressgut 15 seitlich aus der Pressform 1 herausschieben kann. Die weitere Vorgehensweise im Hinblick auf das Umhüllen mit der ersten Folienrolle 19 und der zweiten Folienrolle 37 wurde eingangs bereits beschrieben, worauf hier nur verwiesen wird.

Auch hier ist noch eine Modifikation des Überpressverfahrens zu erläutern, die darin besteht, dass beide der Presskolben der Presszylinder 13 in Richtung auf das zu verdichtende landwirtschaftliche Produkt mit dem zusätzlichen Aufbau in Form der Platte 43 versehen werden und diese dann aber nacheinander gegen die jeweils korrespondierende Seitenwand der Pressform 1 gefahren werden, das landwirtschaftliche Produkt somit beide nacheinander über das Ballenmaß hinaus überpressen, der festgelegte Überpressweg der Ausdehnung jeder der Platten 43 in Richtung auf das landwirtschaftliche Produkt entspricht und die beiden mit der Platte versehenen Presszylinder 13 die weiteren zwei Seitenwände 3' der Pressform 1 bilden.

Nachfolgend werden noch Vorteile der erfindungsgemässe Weiterbildung der bisher bekannten Vorgehensweise für das Herstellen der Ballen aus dem landwirtschaftlichen Produkt erläutert, da sie für alle der dargelegten Ausführungsformen und Varianten gelten.

Es hat sich gezeigt, dass der fertiggepresste Ballen weniger hart eingeklemmt ist, als der bisher nach dem Stand der Technik auf das Ballenmaß gepresste Ballen, das jeweils gepresste landwirtschaftliche Produkt federt zwar zurück, aber bleibt dennoch gegenüber dem bekannten Pressverfahren weniger stark eingespannt. Wichtig für die gleichbleibend gute, zuverlässige Ausführung des Überpressverfahrens ist es, das Ballenmaß als Ausstoßmaß genau einzuhalten. Das bedeutet für die Überpressung, dass die jeweiligen Presskolben der Presszylinder 13 bei jeder der erläuterten Varianten wieder exakt auf das Ballenmaß zurückgefahren werden müssen. Wenn der jeweilige, das Überpressen bewirkende Presszylinder 13 nicht in dieser Weise vollständig zurückgefahren wird, kann der Ausstoßzylinder 7 nicht ordnungsgemäß ausfahren. Wird der jeweilige, das Überpressen bewirkende Presszylinder 13 zu weit zurückgefahren, steht der fertiggepresste Ballen an der Rückwand an und wird nochmals zusammengequetscht.

Bei ordnungsgemäß durchgeführtem Überpressverfahren werden die Ballen aus dem landwirtschaftlichen Produkt nochmals deutlich formstabiler, als in dem durch die EP 1 248 513 B1 bekannten Stand der Technik möglich. Durch das Überpressen, gefolgt von dem nachträglichen Entspannen, nimmt der Druck in dem Ballen insgesamt ab. Ein dauerhafter und zuverlässiger Einsatz auch bei grossen Verarbeitungsmengen an landwirtschaftlichem Produkt kann so gewährleistet werden.

## Patentansprüche

1. Verfahren zum Pressen und Verdichten landwirtschaftlicher Produkte, bei dem das landwirtschaftliche Produkt in eine Pressform (1) eingefüllt wird, deren Seitenwände einen Trog bilden, und jeweils durch zumindest eine Pressvorrichtung (13) gegen die jeweils zu dieser korrespondierende Seitenwand (3) der Pressform gedrückt und dadurch bis zu einem vorherbestimmten Endmaß eines fertigen Ballens aus dem landwirtschaftlichen Produkt als Ballenmaß verdichtet wird, wobei der Trog bei dem Pressen seitlich auf der einen Seite durch eine Ausstoßvorrichtung (7) und auf der anderen Seite durch eine Begrenzungstür (11) geschlossen und diese nach dem Pressen auf das genannte Ballenmaß geöffnet und der Ballen mittels der Ausstoßvorrichtung (7) aus der Pressform (1) in Richtung auf eine Verpackungseinheit zum Versehen des Pressgutes mit einer allseitigen Umhüllung ausgestossen wird, **gekennzeichnet durch** die folgenden Schritte:
- Vorherbestimmen und Festlegen eines Überpressweges,
- Drücken und damit Überpressen des landwirtschaftlichen Produkts durch zumindest eine der Pressvorrichtungen (13) gegen die jeweilige Seitenwand (3) der Pressform (1), über das Ballenmaß hinaus, bis zu dem Ende des festgelegten Überpressweges,
- Stoppen der Überpressung bei dem Erreichen des festgelegten Überpressweges und
- Zurückfahren der jeweiligen Pressvorrichtung (13) auf das Ballenmaß,
- wobei mehr als eine der Pressvorrichtungen (13) nacheinander gegen die jeweilige Seitenwand (3) der Pressform (1), über das Ballenmaß hinaus, bis zu dem Ende des festgelegten Überpressweges gedrückt und damit das landwirtschaftliche Produkt überpresst wird.

2. Verfahren nach Anspruch 1, **dadurch gekennzeichnet, dass** die jeweilige Pressvorrichtung (13) als ein Presszylinder ausgebildet ist.

3. Verfahren nach einem der Ansprüche 1 oder 2, **dadurch gekennzeichnet, dass** das Vorherbestimmen und Festlegen des Überpressweges über den Anpressdruck erfolgt.

4. Verfahren nach einem der Ansprüche 1 oder 2, **dadurch gekennzeichnet, dass** das Vorherbestimmen und Festlegen des Überpressweges über eine mechanische Verriegelung erfolgt und/oder das Zurückfahren der jeweiligen Pressvorrichtung (13) auf das Ballenmaß über eine mechanische Verriegelung bestimmt wird.

5. Verfahren nach einem der Ansprüche 1 oder 2, **dadurch gekennzeichnet, dass** das Vorherbestimmen und Festlegen des Überpressweges durch folgende Schritte erfolgt:
- Erfassen der Position von zumindest einer der Pressvorrichtungen (13) über den von ihr zurückgelegten Weg,
- Steuern des von der zumindest einen Pressvorrichtung (13) zurückgelegten Wegs und Stoppen der Pressvorrichtung (13) und damit der Überpressung sowie Zurückfahren der jeweiligen Pressvorrichtung (13) bei dem Erreichen des festgelegten Überpressweges.

6. Verfahren nach einem der Ansprüche 1 oder 2, **dadurch gekennzeichnet, dass** zumindest eine der Pressvorrichtungen (13) ausgewählt und in Richtung auf das zu verdichtende landwirtschaftliche Produkt mit einem zusätzlichen Aufbau versehen wird, dessen Ausdehnung in Richtung auf das zu verdichtende landwirtschaftliche Produkt dem vorherbestimmten und festgelegten Überpressweg in etwa entspricht, so dass durch das Drücken des landwirtschaftlichen Produkts durch diese eine modifizierte Pressvorrichtung (13) gegen die jeweilige korrespondierende Seitenwand (3) der Pressform ein Überpressen des landwirtschaftlichen Produkts über das Ballenmaß hinaus bis zu dem Ende des festgelegten Überpressweges erfolgt, die Überpressung bei dem Erreichen des festgelegten Überpressweges gestoppt und die ausgewählte Pressvorrichtung (13) auf das Ballenmaß zurückgefahren wird.

7. Verfahren nach Anspruch 6, **dadurch gekennzeichnet, dass** mehr als eine der Pressvorrichtungen (13) in Richtung auf das zu verdichtende landwirtschaftliche Produkt mit einem zusätzlichen Aufbau versehen wird und diese nacheinander gegen die jeweils korrespondierende Seitenwand (3) der Pressform (1), über das Ballenmaß hinaus, bis zu dem Ende des festgelegten Überpressweges gedrückt und damit das landwirtschaftliche Produkt überpresst wird.

8. Verfahren nach einem der Ansprüche 6 oder 7, **dadurch gekennzeichnet, dass** der zusätzliche Aufbau, mit dem zumindest eine der Pressvorrichtungen (13) versehen wird, die Form einer Platte (43) aufweist.

9. Verwendung des Verfahrens nach einem der Ansprüche 1 bis 8 zum Pressen und Verdichten eines landwirtschaftlichen Produkts in Form von Futtermais.

## Claims

1. Method for pressing and compacting agricultural products, wherein the agricultural product is filled into a press form (1) whose lateral walls form a trough and which is pressed by at least one press device (13) against the lateral wall (3) of the press form corresponding thereto and compressed thereby to a predetermined end dimension of the finished bale of the agricultural product as a bale dimension, wherein the trough is closed by a discharge device (7) when pressing laterally on the one side and on the other side by a stop door (11) which is opened after pressing to said bale dimension and the bale is ejected by the discharge device (7) from the press device (1) in the direction of a packaging unit for providing an enveloping wrapping of the pressed product **characterized by** the following steps:
- predetermining and fixing of an overpressing distance,
- pressing and consequently overpressing of the agricultural product by at least one of the press devices (13) against the corresponding lateral wall (3) of the press form (1) beyond the bale dimension until the end of the predetermined overpressing distance,
- stopping of the overpressing when reaching the predetermined overpressing distance and
- returning of the corresponding press device (13) to the bale dimension,
wherein more than one of the press devices (13) is pressed subsequently against the corresponding lateral wall (3) of the press form (1) beyond the bale dimension until the end of the predetermined overpressing distance and thereby the agricultural product is overpressed.

2. The method of claim 1, **characterized in that** the corresponding press device (13) is configured as a press cylinder.

3. The method of one of claims 1 or 2, **characterized in that** the predetermining and fixing of the overpressing distance is achieved by the pressurizing pressure.

4. The method of one of claims 1 or 2, **characterized in that** the predetermining and fixing of the overpressing distance is achieved by a mechanical locking and/or the returning of the corresponding press device (13) to the bale dimension is determined by a mechanical locking.

5. The method of one of claims 1 or 2, **characterized in that** the predetermining and fixing of the overpressing distance is obtained by the following steps:
- determining of the position of at least one of the press devices (13) by the distance covered,
- controlling of the distance covered by the at least one press device (13) and stopping of the press device (13) and thereby the overpressing and returning the corresponding press device (13) when reaching the predetermined overpressing distance.

6. The method of one of claims 1 or 2, **characterized in that** at least one of the press devices (13) is selected and is provided with an additional structure in direction of the agricultural product to be compressed which substantially corresponds in its dimension with the predetermined and fixed overpressing distance in direction of the agricultural product to be compressed such that by the pressing of the agricultural product by this at least one modified press device (13) against the corresponding lateral wall (3) of the press form an overpressing of the agricultural product beyond the bale dimension is achieved, the overpressing is stopped upon reaching of the fixed overpressing distance and the selected press device (13) is returned to the bale dimension.

7. The method of claim 6, **characterized in that** more than one of the press devices (13) is provided with an additional structure in direction of the agricultural product to be compressed and these are pressed serially against the respective corresponding side wall (3) of the press form (1) beyond the bale dimension until the end of the fixed overpressing distance and thereby the agricultural product is overpressed.

8. The method of one of claims 6 or 7, **characterized in that** the additional structure provided for least one press device (13) has the shape of a plate (43).

9. Use of the method of one of claims 1 to 8 for pressing and compacting an agricultural product which comprises maize meal.

## Revendications

1. Procédé pour le pressage et la compression des produits agricoles, de manière que le produit agricole est mis dans une forme de pressage (1) dont les parois latérales forment une auge et qui sont pressées par au moins une installation de pressage (13) contre la paroi latérale correspondante (3) de la forme de pressage et le produit agricole est comprimé ainsi jusqu'une dimension finale prédéterminée d'une balle fini du produit agricole dénommée une dimension de balle, en ce que l'auge est fermée pendant le pressage latéralement sur une côté par une installation d'éjection (7) et sur une autre côté par une porte de limitation (11) et laquelle est ouverte après le pressage à la dimension de balle et la balle est expulsée de la forme de pressage (1) par l'installation d'éjection (7) en direction d'une unité d'emballage pour envelopper le produit par une enveloppe universelle, **caractérisé par** les étapes suivantes :
prédéterminer et fixer une distance de sur-pressage,
presser et surpresser le produit agricole par au moins une des installations de pressage (13) contre la paroi correspondante (3) au-delà de la dimension de balle jusqu'à la fin de la distance de sur-pressage prédéterminée,
stopper le sur-pressage en obtenant la distance de sur-pressage fixée et
retourner l'installation de pressage correspondante (13) à la dimension de balle et en ce que plus d'une des installations de pressage (13) sont pressées de manière consécutive contre la paroi latérale correspondante (3) de la forme de pressage (1) au-delà de la dimension de balle jusqu'à la fin de la distance de sur-pressage fixée et ainsi le produit agricole est surpressé.

2. Le procédé de la revendication 1, **caractérisé en ce que** l'installation de pressage correspondante (13) est configuré comme un cylindre de pressage.

3. Le procédé selon une des revendications 1 ou 2, **caractérisé en ce que** la prédétermination et la fixation de la distance de sur-pressage est obtenu par la pression de pressage.

4. Le procédé selon une des revendications 1 ou 2, **caractérisé en ce que** la prédétermination et la fixation de la distance de sur-pressage est obtenu par un verrouillage mécanique et/ou le retour de l'installation de pressage correspondante (13) à la dimension de balle est déterminé par un verrouillage mécanique.

5. Le procédé selon une des revendications 1 ou 2, **caractérisé en ce que** la prédétermination et la fixation de la distance de sur-pressage comprend les étapes suivantes:
- saisir la position d'au moins une des installations de pressage (13) par voie de sa distance parcourue,
- contrôler la distance parcourue de ladite installation de pressage (13) et stopper l'installation de pressage (13) et par conséquence la sur-pressage et retourner l'installation de pressage correspondante (13) en atteignant la distance de sur-pressage fixée.

6. Le procédé selon une des revendications 1 ou 2, **caractérisé en ce qu'** au moins une des installations de pressage (13) est sélectionnée et munie d'une structure supplémentaire dans la direction du produit agricole à compacter dont la dimension en direction du produit agricole à compacter correspond substantiellement à la distance de sur-pressage prédéterminée et fixée, ainsi que par le pressage du produit agricole contre ladite paroi latérale (3) de la forme de pressage par ladite installation de pressage (13) modifiée un sur-pressage du produit agricole au-delà de la dimension de balle jusqu'à la fin de la distance de sur-pressage est obtenu, le sur-pressage est stoppé en atteignant la distance de sur-pressage fixée et l'installation de pressage (13) sélectionnée est retournée à la dimension de balle.

7. Le procédé de la revendication 6, **caractérisé en ce que** plus qu'une installation de pressage (13) est munie d'une structure supplémentaire dans la direction du produit agricole à compacter et est pressé à la file contre la paroi latérale correspondante (3) de la forme de presse (1) au-delà de la dimension de balle jusqu'à la fin de la distance de sur-pressage fixée et le produit agricole est ainsi sur-pressé.

8. Le procédé selon une des revendications 6 ou 7, caractérisé en ce la structure supplémentaire, avec laquelle est prévue au moins une des installations de pressage (13), a la forme d'un panneau (43).

9. Utilisation du procédé selon une des revendications 1 à 8 pour le pressage et la compression d'un produit agricole sous forme de maïs pour bétail.
